(19) Europäisches Patentamt / European Patent Office / Office européen des brevets

(11) **EP 4 492 883 A1**

(12) **EUROPEAN PATENT APPLICATION**
published in accordance with Art. 153(4) EPC

(43) Date of publication:
**15.01.2025 Bulletin 2025/03**

(21) Application number: 23841784.4

(22) Date of filing: **24.03.2023**

(51) International Patent Classification (IPC):
**H04W 64/00** (2009.01) **G01S 13/00** (2006.01)

(52) Cooperative Patent Classification (CPC):
**G01S 13/00; H04W 4/02; H04W 4/029; H04W 64/00; H04W 72/542**

(86) International application number:
**PCT/CN2023/083779**

(87) International publication number:
**WO 2024/016709 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.07.2022 CN 202210846178**

(71) Applicant: **ZTE Corporation**
**Shenzhen, Guangdong 518057 (CN)**

(72) Inventors:
- **CHEN, Shijun**
  **Shenzhen, Guangdong 518057 (CN)**
- **CHEN, Dawei**
  **Shenzhen, Guangdong 518057 (CN)**
- **LI, Junqiang**
  **Shenzhen, Guangdong 518057 (CN)**
- **XIA, Shuqiang**
  **Shenzhen, Guangdong 518057 (CN)**

(74) Representative: **Boult Wade Tennant LLP**
**Salisbury Square House**
**8 Salisbury Square**
**London EC4Y 8AP (GB)**

(54) **SENSING METHOD, RECEIVER AND STORAGE MEDIUM**

(57) The application discloses a sensing method, a receiver and a storage medium. The sensing method comprises: according to multipath signals received at different moments, determining an arrival time and an arrival angle of each of the multipath signals at different moments; according to the arrival times at different moments, obtaining a propagation distance of each of the multipath signals at different moments; according to the arrival angles and the propagation distances at different moments, obtaining sensing results of a plurality of objects in the current environment at different moments; according to the sensing results at different moments, determining whether the positions of the plurality of objects in the current environment have changed.

Determine, according to multipath signals received at different moments, arrival times and arrival angles of the multipath signals at different moments — S101

Obtain, according to the arrival times at different moments, propagation distances of the multipath signals at different moments — S102

Obtain, according to the arrival angles and the propagation distances at different moments, sensing results of a plurality of objects in a current environment at different moments — S103

Determine, according to the sensing results at different moments, whether positions of the plurality of objects in the current environment have changed — S104

Fig. 1B

## Description

## CROSS-REFERENCE TO RELATED APPLICATIONS

The present application is based on and claims priority to the Chinese patent application No. 202210846178.2 filed on July 19, 2022, the entire content of which is incorporated herein by reference.

## TECHNICAL FIELD

Embodiments of the present application relate to, but not limited to, the field of communications, in particular to a sensing method, a receiver and a storage medium.

## BACKGROUND OF THE INVENTION

In the related art, a wireless communication network satisfies ubiquity, and thus, implementing ubiquitous sensing through the wireless communication network becomes a main feasible technical route. Ubiquitous sensing needs to implement sensing under various complex scenes, for example, a multipath environment, however, sensing of the multipath environments is researched less at present, and a commercial sensing technology is much less, and sensing of the multipath environments is a research focus both in aspects of standardization and education circles, and is in the early stage of technical breakthrough. Thus, how to implement sensing in the current environment in the multipath environments becomes an urgent technical problem to be solved.

## SUMMARY OF THE INVENTION

Embodiments of the present application provide a sensing method, a receiver and a storage medium. A current environment may be sensed by using multipath signals in multipath environment.

In a first aspect, an embodiment of the present application provides a sensing method, including: determining, according to multipath signals received at different moments, arrival times and arrival angles of the multipath signals at different moments; obtaining, according to the arrival times at different moments, propagation distances of the multipath signals at different moments; obtaining, according to the arrival angles and the propagation distances at different moments, sensing results of a plurality of objects in a current environment at different moments; and determining, according to the sensing results at different moments, whether positions of the plurality of objects in the current environment have changed.

In a second aspect, an embodiment of the present application provides a receiver, including: a memory, a processor, and a computer program stored on the memory and capable of running on the processor, where the processor, when executing the computer program, implements the sensing method according to the above first aspect.

In a third aspect, an embodiment of the present application provides a computer readable storage medium, storing a computer executable program, where the computer executable program is used to enable a computer to execute the sensing method according to the above first aspect.

The embodiments of the present application include: determining, according to multipath signals received at different moments, arrival times and arrival angles of the multipath signals at different moments; obtaining, according to the arrival times at different moments, propagation distances of the multipath signals at different moments; obtaining, according to the arrival angles and the propagation distances at different moments, sensing results of a plurality of objects in a current environment at different moments; and determining, according to the sensing results at different moments, whether positions of the plurality of objects in the current environment have changed. That is to say, the multipath signals received at different moments are analyzed and calculated to obtain the arrival times and the arrival angles of the multipath signals at different moments, then the propagation distances of the multipath signals at different moments are determined according to the arrival times and the arrival angles at different moments, the sensing results of the plurality of objects in the current environment at different moments are obtained according to the arrival angles and the propagation distances at different moments, and a sensing result at a current moment is compared with a sensing result at a previous moment, so as to determine whether the positions of the plurality of objects in the current environment have changed. Based on this, compared with the prior art, the sensing method of the present application is used to analyze the multipath signals received at different moments, and thus sense the current environment by using the multipath signals in the multipath environment.

## BRIEF DESCRIPTION OF DRAWINGS

Fig. 1A is a schematic diagram of an implementing environment for executing a sensing method provided by an embodiment of the present application.

Fig. 1B is a flowchart of a sensing method provided by an embodiment of the present application.

Fig. 2 is a schematic diagram of principles for determining reflecting point positions of multipath signals provided by an embodiment of the present application.

Fig. 3 is a schematic diagram of analysis of an impact response interval of arrival times of multipath signals provided by an embodiment of the present application.

Fig. 4 is a sub-flowchart of a sensing method provided by an embodiment of the present application.

Fig. 5 is a sub-flowchart of a sensing method provided by another embodiment of the present application.

Fig. 6 is a sub-flowchart of a sensing method provided by another embodiment of the present application.

Fig. 7 is a schematic diagram of a case that positions are inconsistent at a Tn moment and a Tn+1 moment when a person walks around in a room, provided by an embodiment of the present application.

Fig. 8 is a schematic structural diagram of a receiver provided by an embodiment of the present application.

## DETAILED DESCRIPTION OF THE INVENTION

In order to make objectives, technical schemes and advantages of the present application more clearly understood, the present application is described in detail therebelow in conjunction with accompanying drawings and embodiments. It is to be understood that specific embodiments described here are merely used to explain the present application, but not to limit the present application.

It is to be understood that in descriptions of the embodiments of the present application, a plurality (or multiple) refers to more than two, greater, less, exceeding, etc. are understood as not including the number, and above, below, within, etc. are understood as including the number. In response to determining that descriptions of "first", "second", etc. are merely intended to distinguish technical features, "first", "second", etc. may not be understood as indicating or implying a relative importance or implicitly indicating the number of indicated technical features or implicitly indicating a precedence relationship of indicated technical features.

At present, in an era of the fourth industrial revolution, an important characteristic of the fourth industrial revolution is ubiquitous intelligence. On one hand, the intelligent technology has penetrated into people's lives, and has brought great convenience and a brand new experience to the people's lives; and on the other hand, the intelligent technology will be penetrated into all walks of life, industrial upgrading is implemented through the intelligence, and the industrial efficiency is improved. The development in two directions will greatly free humans, and get rid of constraints of low-level production.

A ubiquitous intelligent technology mainly includes a ubiquitous sensing technology, a ubiquitous computing technology, product research and development, etc. Thus, the ubiquitous intelligence needs a ubiquitous system, however, in a current deployed system, merely the wireless communication network meets the ubiquity, and thus, implementing ubiquitous sensing and ubiquitous computing by using the wireless communication network becomes a main feasible technical route.

At present, in a sensing field, a deep research is mainly implemented in a field of radars, however, at present, application scenes of radar devices are mainly sensing of planes in the air, such as airport radar; and short-distance sensing, such as vehicle radar. These two scenes both belong to simple scenes. The ubiquitous sensing needs to be implemented at various complex scenes, such as an indoor multipath environment, a ground multi-infrastructure environment, a multi-vehicle environment and a market multi-user environment. The sensing of the multipath environments is researched less at present, and the commercial sensing technology is much less. The sensing of the multipath environments is a research focus both in aspects of standardization and education circles, and is in the early stage of technical breakthrough. Thus, how to implement sensing in the current environment in the multipath environments becomes an urgent technical problem to be solved.

Based on this, an embodiment of the present application provides a sensing method, a receiver and a computer readable storage medium. According to the sensing method of one of embodiments, according to multipath signals received at different moments, arrival times and arrival angles of the multipath signals at different moments are determined; according to the arrival times at different moments, propagation distances of the multipath signals at different moments are obtained; according to the arrival angles and the propagation distances at different moments, sensing results of a plurality of objects in a current environment at different moments are obtained; and according to the sensing results at different moments, whether positions of the plurality of objects in the current environment have changed is determined. That is to say, the multipath signals received at different moments are analyzed and calculated to obtain the arrival times and the arrival angles of the multipath signals at different moments, then the propagation distances of the multipath signals at different moments are determined according to the arrival times and the arrival angles at different moments, the sensing results of the plurality of objects in the current environment at different moments are obtained according to the arrival angles and the propagation distances at different moments, and a sensing result at a current moment is compared with a sensing result at a previous moment, so as to determine whether the positions of the plurality of objects in the current environment have changed. Based on this, compared with the prior art, the sensing method of the present application is used to analyze the multipath signals received at different moments, and thus sense the current environment by using the multipath signals in the multipath environment.

The embodiment of the present application is further explained below in conjunction with the accompanying drawings.

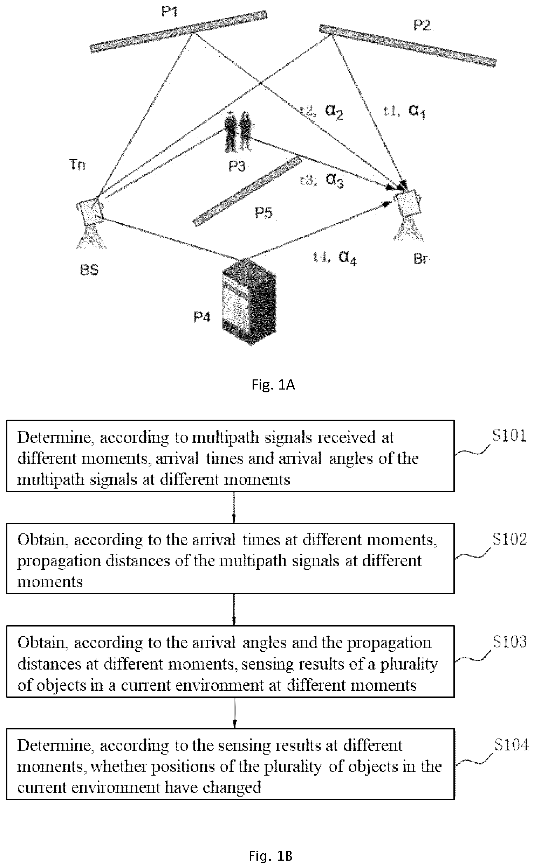

As shown in Fig. 1A, which is a schematic diagram of an implementing environment for executing a sensing method provided by an embodiment of the present application.

In an example of Fig. 1A, the implementing environment includes a transmitter BS and a receiver Br, where the transmitter BS is responsible for transmitting multipath signals, the receiver Br is responsible for receiving the multipath signals, and a direct path may exist or may not exist between the transmitter BS and the receiver Br. P1, P2 and P5 are walls, P3 is a person, P4 is a fixed object, the transmitter BS transmits the multipath signals at a Tn moment, where a signal of a first path is reflected to the receiver Br by P1, and an arrival time and an arrival angle of the signal of the first path received by the receiver Br are respectively t1 and $\alpha_1$; a signal of a second path is reflected to the receiver Br by P2, and an arrival time and an arrival angle of the signal of the second path received by the receiver Br are respectively t2 and $\alpha_2$; a signal of a third path is reflected to the receiver Br by P3, and an arrival time and an arrival angle of the signal of the third path received by the receiver Br are respectively t3 and $\alpha_3$; and a signal of a fourth path is reflected to the receiver Br by P4, and an arrival time and an arrival angle of the signal of the fourth path received by the receiver Br are respectively t4 and $\alpha_4$. It needs to be explained that the multipath signals include, but are not limited to, orthogonal frequency division multiplexing signals, linear frequency modulation signals and other dedicated sensing signals.

Those skilled in the art may understand that the implementing environment may be applied to 5G and 6G communication network systems and subsequent evolved mobile communication network systems, etc., which is not specifically limited in this embodiment.

Those skilled in the art may understand that the implementing environment shown in Fig. 1A does not constitute limitations on the embodiment of the present application, and may include components more or less than those in the diagram, or combination of some components, or different arrangement of components.

Based on the above implementing environment, embodiments of a sensing method of the present application are put forward below.

As shown in Fig. 1B, which is a flowchart of a sensing method provided by an embodiment of the present application. The sensing method may be applied to a receiver, and the receiver includes but is not limited to a reception base station and a multi-antenna receiver. The sensing method includes but is not limited to the following steps.

In step S101: arrival times and arrival angles of multipath signals at different moments are determined according to the multipath signals received at different moments.

In step S102: propagation distances of the multipath signals at different moments are obtained according to the arrival times at different moments.

In step S103: sensing results of a plurality of objects in a current environment at different moments are obtained according to the arrival angles and the propagation distances at different moments.

In step S104: whether positions of the plurality of objects in the current environment have changed is determined according to the sensing results at different moments.

In a feasible implementation, a multi-antenna receiver is taken as the receiver as an example, the multipath signals received at different moments are analyzed and calculated by the multi-antenna receiver to obtain the arrival times and the arrival angles of the multipath signals at different moments, then the propagation distances of the multipath signals at different moments are determined according to the arrival times and the arrival angles at different moments, the sensing results of the plurality of objects in the current environment at different moments are obtained according to the arrival angles and the propagation distances at different moments, and the sensing result at the current moment is compared with the sensing result at the previous moment, so as to determine whether the positions of the plurality of objects in the current environment have changed. Based on this, compared with the prior art, the sensing method of the present application is used to analyze the multipath signals received at different moments, and thus sense the current environment by using the multipath signals in the multipath environment.

In a feasible implementation, as shown in Fig. 1A, the transmitter transmits multipath signals S at a set time Tn and on a wireless resource. The receiver receives multipath signals $R_i$ reflected to the receiver by objects in the environment, $i \geq 1$, and arrival times $t_i$ and arrival angles $\alpha_i$ of the multipath signals are calculated, where i is the number of paths of the received multipath signals. The receiver calculates time-domain impact responses of the multipath signals received at different moments to obtain an impact response sequence, then calculates the arrival times $t_i$ and a time interval where time-domain impact responses of distributed arrival times are located correspondingly according to the impact response sequence, and then determines the arrival angle $\alpha_i$ of each path signal of the multipath signals according to the time interval. A propagation time of each path signal is calculated according to $d_i = c*(t_i - T_N)$, where $d_i$ is the propagation distance of the $i$th path, c is the velocity of light, $t_i$ is the arrival time of the $i$th path, and $T_N$ is time of transmitting the multipath signals by the transmitter. Position coordinates of the transmitter and position coordinates of the receiver are taken as two focal points, half of the propagation distance $d_i$ is taken as a semi-major axis of an ellipse equation, a reflecting point coordinate $P_i$ of each path signal is solved according to the arrival angle $\alpha_i$ of each path signal, and a sensing result $A_{Tn} = \{\alpha_i, d_i, P_i, i \geq 1\}$ at the Tn moment is recorded. By comparing a sensing result $A_{Tn}$ at the current moment with a sensing result $A_{Tn-1}$ at the previous moment, whether positions of a plurality of objects in the current environment have changed is determined. It needs to be noted that the wireless resource includes but is not limited to time-domain and frequency-domain resources allocated by taking a symbol as a unit, taking a subcarrier as a unit or taking a frame as a unit, etc.

In a feasible implementation, before the multipath signals are transmitted by the transmitter, the transmitter and the receiver complete clock synchronization. Completion of the clock synchronization by the transmitter and the receiver refers to that the transmitter and the receiver have completed synchronization, and have implemented clock synchronization. Alternatively, the transmitter and the receiver do not complete synchronization, information such as a clock difference of the transmitter and the receiver and hardware link time delay needs to be measured, the synchronization correction amount is obtained through calculation, and the correction amount is used to correct the received arrival time, so as to implement clock synchronization. It needs to be noted that the arrival time $t_i$ of the present application refers to the corrected arrival time.

In a feasible implementation, multipath signals reflected to the multi-antenna receiver by objects in an environment are received by the multi-antenna receiver, time-domain impact responses of the multipath signals received by multi antennas are analyzed and calculated by the multi-antenna receiver, according to the impact response sequence, the arrival times $t_i$ of the multipath signals and the time interval where time-domain impact responses of distributed arrival times $t_i$ of the multipath signals are located correspondingly;, and then multi-antenna data are obtained according to the time interval where the impact responses of the arrival time $t_i$ of the multipath signals are correspondingly located to analyze the arrival angle $\alpha_i$ of each path. It needs to be noted that the time interval is a time interval whose time-domain response energy or frequency-domain response energy exceeds a first threshold value, and a specific value of the first threshold value may be set differently according to different application scenes. The specific value of the first threshold value is not limited to the present application.

In a feasible implementation, data of the time-domain time corresponding to the time-domain impact responses of each antenna of the receiver may be read according to the time-domain time of each path signal, and angle estimation is performed on the data of the time-domain time corresponding to the time-domain impact responses of each antenna to obtain the arrival angle of each path signal.

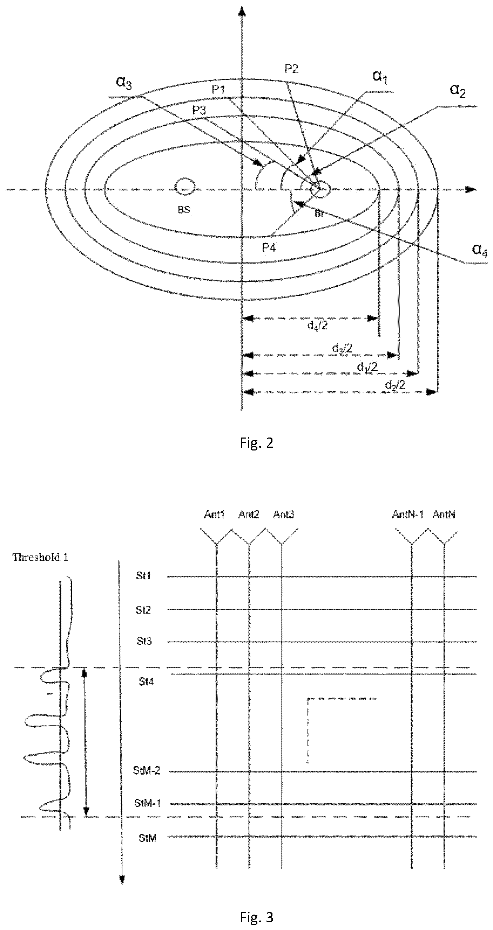

In a feasible implementation, a virtual ellipse is generated by taking a position of the transmitter and a position of the receiver as two focal points, and taking $d_i/2$ as a semi-major axis, $d_i$ is the propagation distance at the current moment; and by taking the position of the receiver as an origin of coordinates and according to the arrival angle $\alpha_i$ of each path signal, a virtual straight line is made for extension until the virtual straight line and the virtual ellipse generate a virtual point of intersection, and the virtual point of intersection is a reflecting point position $P_i$ of each path signal at the current moment. For example, as shown in Fig. 2, four virtual ellipses are generated by taking the position of the transmitter BS and the position of the receiver Br as the two focal points, and respectively taking the propagation distances $d_1/2$, $d_2/2$, $d_3/2$ and $d_4/2$ as the semi-major axes, the position of the receiver Br is taken as the origin of coordinates, four virtual straight line are respectively made according to the arrival angles $\alpha_i$ $\alpha_2$, $\alpha_3$ and $\alpha_4$ of four-path signals for extension until the four virtual straight lines and the four virtual ellipses respectively generate four virtual points of intersection, and the four virtual points of intersection are respectively the reflecting point positions $P_1$, $P_2$, $P_3$ and $P_4$ of the four-path signals at the Tn moment.

In a feasible implementation, the reflecting point positions $P_i$ of each path signal at different moments are determined according to the arrival angles $\alpha_i$ at different moments, the propagation distances $d_i$ at different moments, the position of the transmitter, and the position of the receiver, and the sensing results include the reflecting point positions $P_i$. For example, the reflecting point position of each path signal at the current moment may be obtained by calculating from the following equation set:

$$
\begin{cases}
\dfrac{x^2}{(d_i\,/\,2)^2} + \dfrac{y^2}{b^2} = 1 \\[2mm]
x - c_1 y + c_2 = 0 \\[1mm]
c_1 = ctg(\alpha_i) \\[1mm]
x_r + c_1 y_r + c_2 = 0
\end{cases}
$$

where $b^2 = c^2 - (d_i\,/\,2)^2$, $d_i$ is a propagation distance of an $i^{th}$ path signal at the current moment, c is half of a distance between the position of the transmitter and the position of the receiver, (x, y) is reflecting point position coordinates of the $i^{th}$ path signal at the current moment, $\alpha_i$ is an arrival angle of the $i^{th}$ path signal at the current moment, $(x_r, y_r)$ is position coordinates of the receiver, $C_1$ is a first coefficient, and $C_2$ is a second coefficient. It can be known that an equation set is listed for solving through an ellipse expression and a linear expression, a point of intersection of the ellipse and the straight line may be obtained, and coordinates of the point of intersection are coordinates (x, y) of the reflecting point position $P_i$. It needs to be noted that it may be known from the above formula that in a case that the arrival angles $\alpha_i$ is determined, a value of the first coefficient $C_1$

may be determined; in a case that the position coordinates $(x_r, y_r)$ of the receiver are determined, a value of the second coefficient $C_2$ may be determined in combination with the value of the first coefficient $C_1$; and in a case that the value of the first coefficient $C_1$ and the value of the second coefficient $C_2$ are both determined, the coordinates (x, y) of the reflecting point position $P_i$ may be solved. The sensing result $A_{Tn} = \{\alpha_i, d_i, P_i, i \geq 1\}$ at the Tn moment is recorded.

In a feasible implementation, in a case that the sensing result $A_{Tn}$ at the current moment is consistent with the sensing result $A_{Tn-1}$ at the previous moment, it is determined that positions of the plurality of objects in the current environment have not changed. In a case that the sensing result $A_{Tn}$ at the current moment is inconsistent with the sensing result $A_{Tn-1}$ at the previous moment, it is determined that a position of at least one object in the current environment has changed. The situation that the position of at least one object in the current environment has changed may include a new object appearing in the current environment. In a case that the new object appears in the current environment, and a distance value between a reflecting point position of each path signal of the multipath signals at the current moment and a reflecting point position of each path signal of the multipath signals at the previous moment does not exceed a second threshold value, it is determined that the new object has not moved in the current environment. In a case that the new object appears in the current environment, and the distance value between the reflecting point position of each path signal of the multipath signals at the current moment and the reflecting point position of each path signal of the multipath signals at the previous moment exceeds the second threshold value, it is determined that the new object has moved in the current environment. In a case that the new object has moved in the current environment, a movement trajectory of the new object may be determined according to a coordinate position of the new object at the current moment and a coordinate position of the new object at the previous moment. After the movement trajectory of the new object is determined, the movement trajectory of the new object may be fitted and smoothed through filtering and interpolation. It needs to be noted that a specific value of the second threshold value may be set differently according to different application scenes, and the specific value of the second threshold value is not limited to the present application.

Based on this, compared with the prior art, the sensing method of the present application is adopted to sense the plurality of objects by using the multipath signals in the multipath environment, meanwhile, a moving object may be sensed, and a static object may also be sensed. It can be known that the present application may overcome the problems such as the multipath influence and low speed in a complex environment, so as to implement wireless sensing on the moving object and the static object.

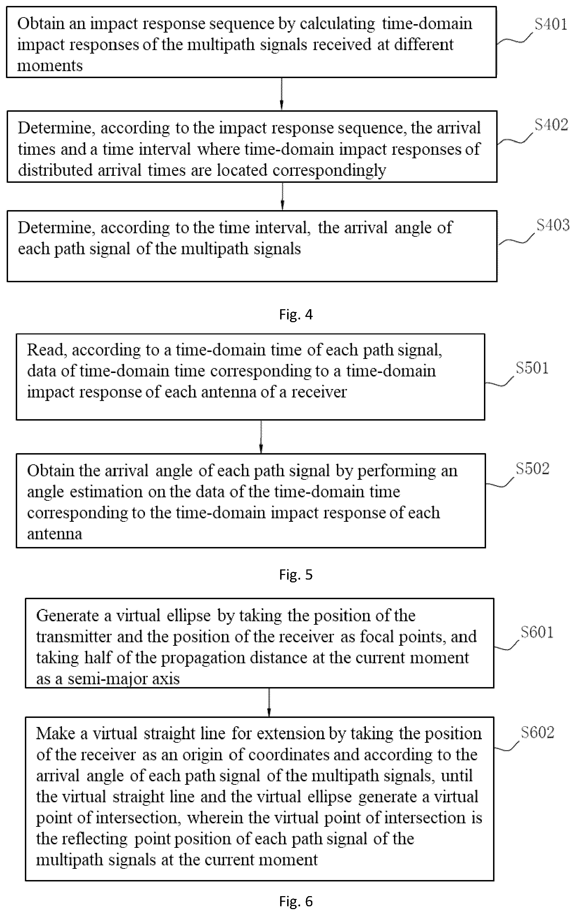

As shown in Fig. 4, the step S101 may include but is not limited to the following sub-steps.

In step S401: the impact response sequence is obtained by caculating the time-domain impact responses of the multipath signals received at different moments.

In step S402: the arrival times and the time interval where the time-domain impact responses of distributed arrival times are correspondingly located are determined according to the impact response sequence.

In step S403: the arrival angle of each path signal of the multipath signals is determined according to the time interval.

In a feasible implementation, as shown in Fig. 3, multipath signals reflected to a multi-antenna receiver by objects in an environment are received by the multi-antenna receiver, for example, the time-domain impact responses of the multipath signals received respectively by multiantennas Anti, Ant2, Ant3...AntN-1, and AntN are analyzed and calculated by the multi-antenna receiver, according to the impact response sequence, the arrival times $t_i$ of the multipath signals are determined, for example, the arrival times of each path signal are St1, St2, St3, St4...StM-2, StM-1 and StM respectively, where St4...StM-2 and StM-1 respectively correspond to the signals with the time-domain response energy exceeding the threshold 1, multi-antenna data is obtained according to the time interval whose time-domain response energy exceeds the threshold 1 to analyze the arrival angles $\alpha_i$ of the corresponding multipath signals, that is to say, the receiver only calculates the arrival angle $\alpha_i$ of the multipath signals whose time-domain response energy exceeds threshold 1. It needs to be noted that the time-domain impact responses are obtained by performing time-domain mathematical processing on the multipath signals received by the receiver and the multipath signals transmitted by the transmitter, or obtained by transforming the multipath signals received by the receiver from a time domain to a frequency domain, obtaining each second subcarrier data by multiplying each first subcarrier data of the multipath signals by a conjugate of frequency-domain data of multipath signals transmitted by a transmitter, and then transforming each second subcarrier data to the time domain. A specific value of the threshold 1 may be set differently according to different application scenes, and the specific value of the threshold 1 is not limited to the present application.

As shown in Fig. 5, the step S403 may include but is not limited to the following sub-steps.

In step S501: data of the time-domain time corresponding to a time-domain impact response of each antenna of the receiver is read according to time-domain time of each path signal.

In step S502: the arrival angle of each path signal is obtained by performing an angle estimation on the data of the time-domain time corresponding to the time-domain impact response of each antenna.

In a feasible implementation, the data of the time-domain time corresponding to the time-domain impact response of each antenna of the receiver is read according to time-domain time of each path signal, and angle estimation is performed to obtain the arrival angle $\alpha_i$ of each path signal.

In a feasible implementation, the propagation distance $d_i$ of each path signal of the multipath signals at the current moment is obtained from the following formula, $d_i = c^*(t_i - T_N)$, where $d_i$ is a propagation distance of an $i^{th}$ path at the current moment, c is the velocity of light, $t_i$ is an arrival time of the $i^{th}$ path at the current moment, and $T_N$ is the transmitting time.

Step S103 may include but is not limited to the following sub-steps.

In step S1031: the reflecting point positions of each path signal at different moments are determined according to the arrival angles at different moments, the propagation distances at different moments, the position of the transmitter, and the position of the receiver, where the sensing results include the reflecting point positions.

In a feasible implementation, the reflecting point position $P_i$ may be solved according to a mathematical equation set. For example, the reflecting point position $P_i$ of each path signal at different moments may be determined according to the arrival angles $\alpha_i$ at different moments, the propagation distances $d_i$ at different moments, the position of the transmitter, and the position of the receiver, and the sensing results include the reflecting point positions $P_i$. For example, the reflecting point position of each path signal of the multipath signals at the current moment may be obtained by calculating from the following equation set:

$$
\begin{cases}
\dfrac{x^2}{(d_i \,/\, 2)^2} + \dfrac{y^2}{b^2} = 1 \\
x - c_1 y + c_2 = 0 \\
c_1 = ctg(\alpha_i) \\
x_r + c_1 y_r + c_2 = 0
\end{cases}
$$

where $b^2 = c^2 - (d_i / 2)^2$, $d_i$ is the propagation distance of the $i^{th}$ path signal at the current moment, c is half of the distance between the position of the transmitter and the position of the receiver, $(x, y)$ is coordinates of the reflecting point position of the $i^{th}$ path signal of the multipath signals at the current moment, $\alpha_i$ is the arrival angle of the $i^{th}$ path signal at the current moment, $(x_r, y_r)$ is the position coordinates of the receiver, $C_1$ is the first coefficient, and $C_2$ is the second coefficient. It can be known that the equation set is listed for solving through the ellipse expression and the linear expression, the point of intersection of the ellipse and the straight line may be obtained, and the coordinates of the point of intersection are the coordinates $(x, y)$ of the reflecting point position $P_i$. It needs to be noted that it may be known from the above formula that in a case that the arrival angles $\alpha_i$ is deter-

mined, the value of the first coefficient $C_1$ may be determined; in a case that the position coordinates $(x_r, y_r)$ of the receiver are determined, the value of the second coefficient $C_2$ may be determined in combination with the value of the first coefficient $C_1$; and in a case that the value of the first coefficient $C_1$ and the value of the second coefficient $C_2$ are both determined, the coordinates $(x, y)$ of the reflecting point position $P_i$ may be solved. The sensing result $A_{Tn} = \{\alpha_i, d_i, P_i, i \geq 1\}$ at the Tn moment is recorded.

As shown in Fig. 6, the step S1031 may include but is not limited to the following sub-steps.

In step S601: a virtual ellipse is generated by taking the position of the transmitter and the position of the receiver as focal points, and taking half of the propagation distance at the current moment as a semi-major axis.

In step S602: by taking the position of the receiver as an origin of coordinates and according to the arrival angles of each path signal, a virtual straight line is made for extension until the virtual straight line and the virtual ellipse generate a virtual point of intersection, and the virtual point of intersection is the reflecting point position of the each path signal at the current moment.

In a feasible implementation, the reflecting point position $P_i$ may be determined according to a geometry manner. For example, a virtual ellipse is generated by taking the position of the transmitter and the position of the receiver as two focal points, and taking the propagation distance $d_i/2$ at the current moment as a semi-major axis; and by taking the position of the receiver is taken as an origin of coordinates and according to the arrival angle $\alpha_i$ of each path signal, a virtual straight line is made for extension until the virtual straight line and the virtual ellipse generate a virtual point of intersection, and the virtual point of intersection is the reflecting point position $P_i$ of each path signal of the multipath signals at the current moment. For example, as shown in Fig. 2, four virtual ellipses are generated by taking the position of the transmitter BS and the position of the receiver Br as the two focal points, and respectively taking the propagation distances $d_1/2$, $d_2/2$, $d_3/2$ and $d_4/2$ as the semi-major axes, by taking the position Br of the receiver is taken as the origin of coordinates and according to the arrival angles $\alpha_i$, $\alpha_2$, $\alpha_3$ and $\alpha_4$ of four of the multipath signals, four virtual straight line are respectively made for extension until the four virtual straight lines and the four virtual ellipses respectively generate four virtual points of intersection, and the four virtual points of intersection are respectively the reflecting point positions $P_1$, $P_2$, $P_3$ and $P_4$ of the four of the multipath signals at the Tn moment.

In a feasible implementation, in a case that the sensing result $A_{Tn}$ at the current moment is consistent with the sensing result $A_{Tn-1}$ at the previous moment, it is determined that the positions of the plurality of objects in the current environment have not changed. In a case that the sensing result $A_{Tn}$ at the current moment is inconsistent with the sensing result $A_{Tn-1}$ at the previous moment, it is determined that a position of at least one object in the current environment has changed. The situation that the position of at least one object in the current environment has changed may include a new object appearing in the current environment. In a case that the new object appears in the current environment, and a distance value between a reflecting point position of each path signal of the multipath signals at the current moment and a reflecting point position of each path signal of the multipath signals at the previous moment does not exceed a second threshold value, it is determined that the new object has not moved in the current environment. In a case that the new object appears in the current environment, and the distance value between the reflecting point position of each path signal of the multipath signals at the current moment and the reflecting point position of each path signal of the multipath signals at the previous moment exceeds the second threshold value, it is determined that the new object has moved in the current environment. In a case that the new object has moved in the current environment, a movement trajectory of the new object may be determined according to a coordinate position of the new object at the current moment and a coordinate position of the new object at the previous moment. After the movement trajectory of the new object is determined, the movement trajectory of the new object may be fitted and smoothed through filtering and interpolation. It needs to be noted that a specific value of the second threshold value may be set differently according to different application scenes, and the specific value of the second threshold value is not limited to the present application.

Based on this, compared with the prior art, the sensing method of the present application is adopted to sense the plurality of objects by using the multipath signals in the multipath environment, meanwhile, a moving object may be sensed, and a static object may also be sensed. It can be known that the present application may overcome the problems such as the multipath influence and low speed in a complex environment, so as to implement wireless sensing on the moving object and the static object.

The sensing method provided by the present application is further introduced in conjunction with the specific accompanying drawings and embodiments below.

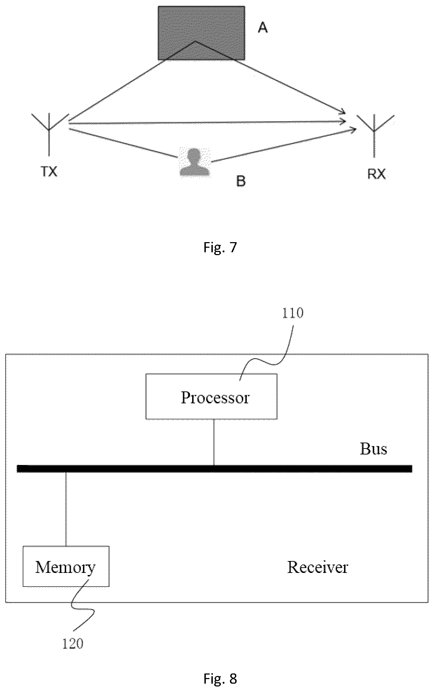

Embodiment one, as shown in Fig. 7, a situation that while a person walks around a room, positions at the Tn moment are inconsistent with those at the Tn+1 moment is taken as an example.

For signal setting, linear frequency modulation (LFM) signals are adopted as the multipath signals, a frequency point is 3.5 GHz, a bandwidth is 100 MHz, a sampling rate is 122.88 MHz, a signal transmitting power is 43 dBm, a noise power is -94 dBm, and an 8*1 linear array of an antenna of a base station is received. A sensing signal is an LFM symbol, and is transmitted once every 5 ms. Each sampling point time is Ts.

For environment setting, a situation that with a spacious room with an area of 10 m*5 m, one line of sight (LOS) path exists between a transmitter and a receiver, multipath signals are respectively reflected by a person and a wall, and reflecting points of the transmitter, the receiver and the multipath signals are at the same plane is taken as an example.

Sensing flows are as follows:

A) an LFM signal is periodically transmitted by a transmitter antenna TX, the LFM signal is reflected respectively by a wall A and a person B to a receiver antenna RX, and a direct path exists between the transmitter and the receiver. Reception data processing at the Tn moment is taken as an example, and a processing process at the Tn+1 moment is similar. At the Tn moment, data received by the receiver is a matrix $R_{8\times4096}$, and 4096 is the FFT number under 122.8 MHz and the bandwidth of 100 MHz.

B) The arrival time $t_i$ of the multipath signals is calculated.
A time-domain channel impact response of an $m^{th}$ antenna is $h_m(t) = IFFT[FFT(R_m).*conj(FFT(s))]$,

$$h'_m(t) = \sum_{m=1}^{8} h_m(t)$$

$1 \le m \le 8$, a summation is , a crest moment $t_i$ greater than a threshold Th1 in a curve

$h'_m(t)$ is obtained, $1 \le t_i \le 4096$, and $t_i$ is regarded as an arrival time of each arrival path. A response propagation distance is $d_i = c*(t_i - T_N)$, where c is the velocity of light, and $T_N$ is time of transmitting the LFM signal by the transmitter.

C) An arrival angle $\alpha_i$ of each path is solved.
A time delay of an $i^{th}$ path is $t_i$, sampling point data R1 ($8 \times Th2$) with a length of a threshold Th2 around $t_i$ is cut out, and a related matrix A=R1*R1H is constructed. By using a classical multiple signal classification (MUSIC) algorithm, a characteristic value, a characteristic vector, a signal sub-space and a noise sub-space are solved, spectrum peak estimation is performed, and an angle corresponding to a spectrum peak value is the arrival angle $\alpha_i$ of the path.

D) Reflecting point coordinates are obtained.

According to priori knowledge, the first path is an LOS path, and starting from a second path, the following equation set is listed for solving reflecting point coordinates (x, y).

$$
\begin{cases}
\dfrac{x^2}{(d_i\,/\,2)^2} + \dfrac{y^2}{b^2} = 1 \\
x - c_1 y + c_2 = 0 \\
c_1 = ctg(\alpha_i) \\
x_r + c_1 y_r + c_2 = 0
\end{cases}
$$

where $b^2 = c^2 - (d_i/2)^2$ $d_i$ is a propagation distance of an $i^{th}$ path signal at the current moment, c is half of a distance between the position of the transmitter and the position of the receiver, (x, y) is coordinates of the reflecting point position of the $i^{th}$ path signal of the multipath signals at the current moment, $\alpha_i$ is an arrival angle of the $i^{th}$ path signal at the current moment, $(x_r, y_r)$ is position coordinates of the receiver, $C_1$ is a first coefficient, and $C_2$ is a second coefficient. It can be known that an equation set is listed for solving through an ellipse expression and a linear expression, a point of intersection of the ellipse and the straight line may be obtained, and coordinates of the point of intersection are the coordinates (x, y) of the reflecting point position $P_i$. It needs to be noted that it may be known from the above formula that in a case that the arrival angles $\alpha_i$ is determined, a value of the first coefficient $C_1$ may be determined; in a case that the position coordinates $(x_r, y_r)$ of the receiver are determined, a value of the second coefficient $C_2$ may be determined in combination with the value of the first coefficient $C_1$; and in a case that the value of the first coefficient $C_1$ and the value of the second coefficient $C_2$ are both determined, the coordinates (x, y) of the reflecting point position $P_i$ may be solved. The sensing result $A_{Tn}=\{\alpha_i, d_i, P_i, i{\geq}1\}$ at the Tn moment is recorded.

The above steps A) to D) are repeated continuously to process the reception data at the Tn+1 moment, Tn+2 moment..., $A_{Tn+1}=\{pi, i{\geq}1\}$, $A_{Tn+2}=\{pi, i{\geq}1\}$..., and the different reflecting point coordinates at different moments are connected to obtain trajectories of the different reflecting points over a period of time. In response to determining that a trajectory of a certain reflecting point exists, and that a moving distance is greater than the second threshold value at a neighboring moment, it is considered that a person walks around in the room.

Embodiment two, a situation that there is no person in the room at the Tn moment, but there is a person in the room at the Tn+1 moment is taken as an example.

For signal setting, LFM signals are adopted as the multipath signals, a frequency point is 3.5 GHz, a bandwidth is 100 MHz, a sampling rate is 122.88 MHz, a signal transmitting power is 43 dBm, a noise power is -94 dBm, and an 8*1 linear array of an antenna of a base station is received. A sensing signal is as an LFM symbol, and is transmitted once every 5 ms. Time of each sampling point is Ts.

For environment setting, a situation that with a spacious room with an area of 10 m*5 m, one LOS path exists between the transmitter and the receiver, the multipath signals are respectively reflected by the person and the wall, and the reflecting points of the transmitter, the receiver and the multipath signals are at the same plane is taken as an example.

A sensing flow is as follows:

A) an LFM signal is periodically transmitted by a transmitter antenna TX, the LFM signal is reflected respectively by a wall A to a receiver antenna RX at the Tn moment, and meanwhile, a direct path exists between the transmitter and the receiver. At the Tn+1 moment, a person walks into a room, and a signal path reflected to the receiver antenna by the person is added. Reception data processing at the Tn moment is taken as an example, and a processing process at the Tn+1 moment is similar. At the Tn moment, data received by the receiver is a matrix $R_{8\times4096}$, and 4096 is the FFT number under 122.8 MHz and the bandwidth of 100 MHz.

B) The arrival time $t_i$ of the multipath signals is calculated.
A time-domain channel impact response of an $m^{th}$ antenna is $h_m(t) = IFFT[FFT(R_m),{}^*conj(FFT(s))]$,

$$
h_m'(t) = \sum_{m=1}^{8} h_m(t)
$$

$1{\leq}m{\leq}8$, a summation is , a crest moment $t_i$ greater than a threshold Th1 in a curve

$h_m'(t)$ is obtained, $1{\leq}t_i{\leq}4096$, and $t_i$ is regarded as an arrival time of each arrival path. A response propagation distance is $d_i=c^*(t_i-T_N)$, where c is velocity of light, and $T_N$ is time of the transmitting the LFM signal by the transmitter.

C) An arrival angle $\alpha_i$ of each path is solved.
A time delay of an $i^{th}$ path is $t_i$, sampling point data R1 ($8\times$Th2) with a length of a threshold Th2 around $t_i$ is cut out, and a related matrix A=R1*R1H is constructed. By using a classical multiple signal classification (MUSIC) algorithm, a characteristic value, a characteristic vector, a signal sub-space and a noise sub-space are solved, a spectrum peak estimation is performed, and an angle corresponding to a spectrum peak value is the arrival angle $\alpha_i$ of the path.

D) Reflecting point coordinates are obtained.

According to priori knowledge, the first path is an LOS path, and starting from a second path, the following equation set is listed for solving reflecting point coordinates (x, y).

$$\begin{cases} \dfrac{x^2}{(d_i/2)^2} + \dfrac{y^2}{b^2} = 1 \\ x - c_1 y + c_2 = 0 \\ c_1 = ctg(\alpha_i) \\ x_r + c_1 y_r + c_2 = 0 \end{cases}$$

where $b^2 = c^2 - (d_i/2)^2$ $d_i$ is a propagation distance of an $i^{th}$ path signal at the current moment, c is half of a distance between the position of the transmitter and the position of the receiver, (x, y) is coordinates of the reflecting point position of the $i^{th}$ path signal of the multipath signals at the current moment, $\alpha_i$ is an arrival angle of the $i^{th}$ path signal at the current moment, $(x_r, y_r)$ is position coordinates of the receiver, $C_1$ is a first coefficient, and $C_2$ is a second coefficient. It can be known that an equation set is listed for solving through an ellipse expression and a linear expression, a point of intersection of the ellipse and the straight line may be obtained, and coordinates of the point of intersection are the coordinates (x, y) of the reflecting point position $P_i$. It needs to be noted that it may be known from the above formula that in a case that the arrival angles $\alpha_i$ is determined, a value of the first coefficient $C_1$ may be determined; in a case that the position coordinates $(x_r, y_r)$ of the receiver are determined, a value of the second coefficient $C_2$ may be determined in combination with the value of the first coefficient $C_1$; and in a case that the value of the first coefficient $C_1$ and the value of the second coefficient $C_2$ are both determined, the coordinates (x, y) of the reflecting point position $P_i$ may be solved. The sensing result $A_{Tn} = \{\alpha_i, d_i, P_i, i \geq 1\}$ at the Tn moment is recorded.

The above steps A) to D) are repeated continuously to process the reception data at the Tn+1 moment, Tn+2 moment..., $A_{Tn+1} = \{pi, i > 1\}$, $A_{Tn+2} = \{p_i, i \leq 1\}$......, and the different reflecting point coordinates at different moments are connected to obtain trajectories of different reflecting points over a period of time. The movement trajectory of the reflecting point is analyzed, in response to determining that one trajectory exists, no trajectory is recorded before the Tn moment, after the Tn moment, continuous moving is performed, a position distance at a neighboring moment is greater than the second threshold value, it is considered that there is no person in the room at the Tn moment, and there is a person in the room and the person moves at the Tn+1 moment. In response to determining that one trajectory exists, no trajectory is recorded before the Tn moment, after the Tn moment, a new reflecting point position estimation appears, positions coincide with each other or a distance between neighboring position points is less than the second threshold value, it is considered that there is no person in the room at the Tn moment, and there is a person in the room and the person does not move at the Tn+1 moment.

As shown in Fig. 8, an embodiment of the present application further provides a receiver.

Specifically, the receiver includes: one or more processors 110 and a memory 120, and one processor 110 and the memory 120 are taken as an example in Fig. 8. The processor 110 and the memory 120 may be connected through a bus or other manners, and connection through the bus is taken as an example in Fig. 8.

The memory 120 serves as a non-transient computer readable storage medium, and may be configured to store non-transient software programs and non-transient computer executable programs, such as the above sensing method in the embodiment of the present application. The processor 110 implements the above sensing method in the embodiment of the present application by running the non-transient software programs and programs stored in the memory 120.

The memory 120 may include a storage program area and a storage data area, where the storage program area may store operation systems, and application programs needs by at least one function; and the storage data area may store data needed by executing the above sensing method in the embodiment of the present application and the like. In addition, the memory 120 may include a high-speed random access memory, and may further include a non-transient memory, for example, at least one magnetic disk storage apparatus, a flash storage device, or other non-transient solid-state memory. In some implementations, the memory 120 optionally includes a memory arranged remotely relative to the processor 110, and these remote memories may be connected to a terminal through a network. Instances of the above network include but are not limited to an internet, an intranet, a local area network, a mobile communication network and a combination of them.

The non-transient software programs and programs needed by implementing the above sensing method in the embodiment of the present application are stored in the memory 120, when executed by one or more processors 110, implement the above sensing method in the embodiment of the present application, for example, implement the method step S101 to step S104 in the above Fig. 1B, the method step S401 to step S403 in Fig. 4, the method step S501 to step S502 in Fig. 5, and the method step S601 to S602 in Fig. 6. The receiver determines the arrival times and the arrival angles of multipath signals at different moments according to the multipath signals received at different moments; the propagation distances of the multipath signals at different moments are obtained according to the arrival times at different moments; the sensing results of the plurality of objects in the current environment at different moments are obtained according to the arrival angles and the propagation distances at different moments; and whether the positions of the plurality of objects in the current environment have changed is determined according to the sensing results at different moments. That is to say, the multipath signals received at different moments are analyzed and calculated to obtain the arrival times and the arrival angles of the multipath signals at different moments, then the propagation distances of the multipath signals at different moments are determined according to the arrival times and the arrival angles at different moments, the sensing results of the plurality of objects in the current environment at different moments are obtained according to the arrival angles and the propagation distances at different moments, and the sensing result at the current moment is compared with the sensing result at the previous moment, so as to determine whether the positions of the plurality of objects in the current environment have changed. Based on this, compared with the prior art, the sensing method of the present application is used to analyze the multipath signals received at different moments, and thus sense the current environment by using the multipath signals in the multipath environment.

In addition, an embodiment of the present application further provides a computer readable storage medium. A computer executable program is stored in the computer readable storage medium, and the computer executable program is executed by one or more control processors, for example, the computer executable program is executed by one processor 110 in Fig. 8, so that the above one or more processors 110 execute the above sensing method in the embodiment of the present application, for example, execute the method step S101 to step S104 in the above Fig. 1B, the method step S401 to step S403 in Fig. 4, the method step S501 to step S502 in Fig. 5, and the method step S601 to S602 in Fig. 6. The arrival times and the arrival angles of multipath signals at different moments are determined according to the multipath signals received at different moments; the propagation distances of the multipath signals at different moments are obtained according to the arrival times at different moments; the sensing results of the plurality of objects in the current environment at different moments are obtained according to the arrival angles and the propagation distances at different moments; and whether the positions of the plurality of objects in the current environment have changed is determined according to the sensing results at different moments. That is to say, the multipath signals received at different moments are analyzed and calculated to obtain the arrival times and the arrival angles of the multipath signals at different moments, then the propagation distances of the multipath signals at different moments are determined according to the arrival times and the arrival angles at different moments, the sensing results of the plurality of objects in the current environment at different moments are obtained according to the arrival angles and the propagation distances at different moments, and the sensing result at the current moment is compared with the sensing result at the previous moment, so as to determine whether the positions of the plurality of objects in the current environment have changed. Based on this, compared with the prior art, the sensing method of the present application is used to analyze the multipath signals received at different moments, and thus sense the current environment by using the multipath signals in the multipath environment.

Those ordinarily skilled in the art may understand that all or some steps and systems in the above disclosed method may be implemented as software, firmware, hardware and an appropriate combination of them. Some physical components or all physical components may be implemented as software capable of being executed by a processor, for example, a central processing unit, a digital signal processor or a microprocessor, or may be implemented as hardware, or may be implemented as an integrated circuit, for example, an application-specific integrated circuit. These software may be distributed on a computer readable medium, and the computer readable medium may include a computer storage medium (or a non-transient medium) and a communication medium (or a transient medium). It can be known by those ordinarily skilled in the art that a term computer storage medium includes volatile and non-volatile media and removable and non-removable media implemented in any method or technology for storing information (such as a computer readable program, a data structure, a program module or other data). The computer storage medium includes but is not limited to an RAM, an ROM, an EEPROM, a flash storage or other memory technologies, a CD-ROM, a digital multifunctional disk (DVD) or other optical disk memories, magnetic boxes, magnetic tapes, magnetic disk storages or other magnetic storage apparatuses, or any other media capable of being used for store expected information and being accessed by a computer information for storing expectation and any other media capable of being accessed by a computer. In addition, it can be known by those ordinarily skilled in the art that the communication medium generally includes a computer readable program, a data structure, a program module or other data in modulation data signals such as a carrier or other transmission mechanisms, and may include any information delivery medium.

## Claims

1. A sensing method, comprising:

   determining, according to multipath signals received at different moments, arrival times and arrival angles of the multipath signals at different moments;
   obtaining, according to the arrival times at different moments, propagation distances of the multipath signals at different moments;
   obtaining, according to the arrival angles and the propagation distances at different moments, sensing results of a plurality of objects in a current environment at different moments; and
   determining, according to the sensing results at different moments, whether positions of the plurality of objects in the current environment have changed.

2. The method according to claim 1, wherein determining, according to the multipath signals received at different moments, the arrival times and the arrival angles of the multipath signals at different moments, comprises:

obtaining an impact response sequence by calculating time-domain impact responses of the multipath signals received at different moments; determining, according to the impact response sequence, the arrival times and a time interval where time-domain impact responses of distributed arrival times are located correspondingly; and determining, according to the time interval, the arrival angle of each path signal of the multipath signals.

3. The method according to claim 2, wherein the time-domain impact responses are obtained by performing time-domain mathematical processing on multipath signals received by a receiver and multipath signals transmitted by a transmitter.

4. The method according to claim 2, wherein the time-domain impact responses are obtained by transforming multipath signals received by a receiver from a time domain to a frequency domain, obtaining each second subcarrier data by multiplying each first subcarrier data of the multipath signals by a conjugate of frequency-domain data of multipath signals transmitted by a transmitter, and then transforming each the second subcarrier data to the time domain.

5. The method according to claim 2, wherein the time interval is a time interval whose time-domain response energy or frequency-domain response energy exceeds a first threshold value.

6. The method according to claim 2, wherein determining, according to the time interval, the arrival angle of each path signal of the multipath signals, comprises:

reading, according to a time-domain time of each path signal, data of time-domain time corresponding to a time-domain impact response of each antenna of a receiver; and obtaining the arrival angle of each path signal by performing an angle estimation on the data of the time-domain time corresponding to the time-domain impact response of each antenna.

7. The method according to claim 1, wherein obtaining, according to the arrival times at different moments, the propagation distances of the multipath signals at different moments, comprises:

determining transmitting times of transmitting the multipath signals by a transmitter at different moments; and obtaining propagation distances of each path signal of the multipath signals at different moments by calculating according to the transmitting times, the arrival times at different moments and velocity of light.

8. The method according to claim 7, wherein obtaining the propagation distances of each path signal of the multipath signals at different moments by calculating according to the transmitting times, the arrival times at different moments and the velocity of light, comprises:
obtaining a propagation distance of each path signal of the multipath signals at a current moment from the following formula:
$d_i = c*(t_i - T_N)$, wherein $d_i$ is a propagation distance of an $i^{th}$ path at the current moment, c is the velocity of light, ti is an arrival time of the $i^{th}$ path at the current moment, and $T_N$ is the transmitting time.

9. The method according to claim 8, wherein obtaining, according to the arrival angles and the propagation distances at different moments, the sensing results of the plurality of objects in the current environment at different moments, comprises:
determining reflecting point positions of each path signal of the multipath signals at different moments according to the arrival angles at different moments, the propagation distances at different moments, a position of a transmitter, and a position of a receiver, wherein the sensing results comprise the reflecting point positions.

10. The method according to claim 9, wherein determining the reflecting point positions of each path signal of the multipath signals at different moments according to the arrival angles at different moments, the propagation distances at different moments, the position of the transmitter, and the position of the receiver, comprises:

obtaining the reflecting point position of each path signal of the multipath signals at a current moment by calculating from the following equation set:

$$\begin{cases} \dfrac{x^2}{(d_i/2)^2} + \dfrac{y^2}{b^2} = 1 \\ x - c_1 y + c_2 = 0 \\ c_1 = ctg(\alpha_i) \\ x_r + c_1 y_r + c_2 = 0 \end{cases}$$

wherein $b^2 = c^2 - (d_i/2)^2$, $d_i$ is a propagation distance of an $i^{th}$ path signal at the current moment, c is half of a distance between the position of the transmitter and the position of the receiver, (x, y) is coordinates of a reflecting point position of the $i^{th}$ path signal at the current moment, $\alpha_i$ is an arrival angle of the $i^{th}$ path signal at the current moment, $(x_r, y_r)$ is position coordinates of the receiver, $C_i$ is a first coefficient, and $C_2$ is a second coefficient.

11. The method according to claim 9, wherein determining the reflecting point positions of each path signal of the multipath signals at different moments according to the arrival angles at different moments, the propagation distances at different moments, the position of the transmitter, and the position of the receiver, comprises:

    generating a virtual ellipse by taking the position of the transmitter and the position of the receiver as focal points, and taking half of the propagation distance at the current moment as a semi-major axis; and
    making a virtual straight line for extension by taking the position of the receiver as an origin of coordinates and according to the arrival angle of each path signal of the multipath signals, until the virtual straight line and the virtual ellipse generate a virtual point of intersection, wherein the virtual point of intersection is the reflecting point position of each path signal of the multipath signals at the current moment.

12. The method according to claim 11, wherein determining, according to the sensing results at different moments, whether the positions of the plurality of objects in the current environment have changed, comprises:
    determining, in a case that a sensing result at a current moment is consistent with a sensing result at a previous moment, that the positions of the plurality of objects in the current environment have not changed.

13. The method according to claim 11, wherein determining, according to the sensing results at different moments, whether the positions of the plurality of objects in the current environment have changed, comprises:
    determining, in a case that a sensing result at a current moment is inconsistent with a sensing result at a previous moment, that the position of at least one object in the current environment has changed.

14. The method according to claim 13, wherein determining, in the case that the sensing result at the current moment is inconsistent with the sensing result at the previous moment, that the position of the at least one object in the current environment has changed, comprises:
    determining, in the case that the sensing result at the current moment is inconsistent with the sensing result at the previous moment, that a new object appears in the current environment.

15. The method according to claim 14, wherein in a case that the new object appears in the current environment, and a distance value between the reflecting point position of each path signal of the multipath signals at the current moment and a reflecting point position of each path signal of the multipath signals at the previous moment does not exceed a second threshold value, determining that the new object has not moved in the current environment.

16. The method according to claim 14, wherein in a case that the new object appears in the current environment, and a distance value between the reflecting point position of each path signal of the multipath signals at the current moment and a reflecting point position of each path signal of the multipath signals at the previous moment exceeds a second threshold value, determining that the new object has moved in the current environment.

17. The method according to claim 16, wherein in a case that the new object has moved in the current environment, determining a movement trajectory of the new object according to the reflecting point position of each path signal of the multipath signals at the current moment and the reflecting point position of each path signal of the multipath signals at the previous moment.

18. The method according to claim 17, wherein after determining, in the case that the new object has moved in the current environment, the movement trajectory of the new object according to the reflecting point position of each path signal of the multipath signals at the current moment and the reflecting point position of each path signals of the multipath signals at the previous moment, the method further comprises:
    fitting and smoothing the movement trajectory by means of filtering and interpolation.

19. The method according to any one of claims 1 to 18, wherein the multipath signals are orthogonal frequency division multiplexing signals or linear frequency modulation signals.

20. A receiver, comprising: a memory, a processor, and a computer program stored on the memory and capable of running on the processor, wherein the processor, when executing the computer program, implements the sensing method according to any one of claims 1 to 19.

21. A computer readable storage medium, storing a computer executable instruction, wherein the computer executable instruction is used to execute the sensing method according to any one of claims 1 to 19.

Fig. 1A

| | |
|---|---|
| Determine, according to multipath signals received at different moments, arrival times and arrival angles of the multipath signals at different moments | S101 |

| | |
|---|---|
| Obtain, according to the arrival times at different moments, propagation distances of the multipath signals at different moments | S102 |

| | |
|---|---|
| Obtain, according to the arrival angles and the propagation distances at different moments, sensing results of a plurality of objects in a current environment at different moments | S103 |

| | |
|---|---|
| Determine, according to the sensing results at different moments, whether positions of the plurality of objects in the current environment have changed | S104 |

Fig. 1B

Fig. 2

Fig. 3

Obtain an impact response sequence by calculating time-domain impact responses of the multipath signals received at different moments
S401

Determine, according to the impact response sequence, the arrival times and a time interval where time-domain impact responses of distributed arrival times are located correspondingly
S402

Determine, according to the time interval, the arrival angle of each path signal of the multipath signals
S403

Fig. 4

Read, according to a time-domain time of each path signal, data of time-domain time corresponding to a time-domain impact response of each antenna of a receiver
S501

Obtain the arrival angle of each path signal by performing an angle estimation on the data of the time-domain time corresponding to the time-domain impact response of each antenna
S502

Fig. 5

Generate a virtual ellipse by taking the position of the transmitter and the position of the receiver as focal points, and taking half of the propagation distance at the current moment as a semi-major axis
S601

Make a virtual straight line for extension by taking the position of the receiver as an origin of coordinates and according to the arrival angle of each path signal of the multipath signals, until the virtual straight line and the virtual ellipse generate a virtual point of intersection, wherein the virtual point of intersection is the reflecting point position of each path signal of the multipath signals at the current moment
S602

Fig. 6

Fig. 7

Fig. 8

## INTERNATIONAL SEARCH REPORT

| International application No. |
| --- |
| **PCT/CN2023/083779** |

| A. | CLASSIFICATION OF SUBJECT MATTER |
| --- | --- |
| | H04W64/00(2009.01)i;  G01S13/00(2006.01)i |

According to International Patent Classification (IPC) or to both national classification and IPC

| B. | FIELDS SEARCHED |
| --- | --- |

Minimum documentation searched (classification system followed by classification symbols)

    IPC:H04W,G01S

Documentation searched other than minimum documentation to the extent that such documents are included in the fields searched

Electronic data base consulted during the international search (name of data base and, where practicable, search terms used)

    WPABS; CNTXT; ENTXTC, DWPI; ENTXT; CNKI; 3GPP: 感知, 雷达, 多径, 定位, 移动, sens+, radar, multipath, locat+, mobile, mov+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2010207804 A1 (QINETIQ LTD.) 19 August 2010 (2010-08-19)<br>    description, paragraphs [0048]-[0095], and figures 1-11 | 1-21 |
| Y | CN 103140772 A (FRANCE TELECOM S.A.) 05 June 2013 (2013-06-05)<br>    description, paragraphs [0054]-[0237], and figures 1-10 | 1-21 |
| A | US 2019369204 A1 (ELECTRONICS AND TELECOMMUNICATIONS RESEARCH<br>INSTITUTE) 05 December 2019 (2019-12-05)<br>    entire document | 1-21 |
| A | US 2005285787 A1 (THALES SA.) 29 December 2005 (2005-12-29)<br>    entire document | 1-21 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 June 2023** | **25 June 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/083779**

| Patent document cited in search report | | | Publication date (day/month/year) | Patent family member(s) | | | Publication date (day/month/year) |
|---|---|---|---|---|---|---|---|
| US | 2010207804 | A1 | 19 August 2010 | US | 8217827 | B2 | 10 July 2012 |
| | | | | GB | 0818682 | D0 | 19 November 2008 |
| | | | | GB | 2453846 | A | 22 April 2009 |
| | | | | GB | 2453846 | B | 24 February 2010 |
| | | | | WO | 2009047546 | A1 | 16 April 2009 |
| | | | | GB | 0719995 | D0 | 21 November 2007 |
| CN | 103140772 | A | 05 June 2013 | US | 2013154872 | A1 | 20 June 2013 |
| | | | | US | 9176222 | B2 | 03 November 2015 |
| | | | | EP | 2612166 | A1 | 10 July 2013 |
| | | | | EP | 2612166 | B1 | 19 November 2014 |
| | | | | WO | 2012089942 | A1 | 05 July 2012 |
| | | | | FR | 2964289 | A1 | 02 March 2012 |
| US | 2019369204 | A1 | 05 December 2019 | US | 11456809 | B2 | 27 September 2022 |
| US | 2005285787 | A1 | 29 December 2005 | DE | 602004025177 | D1 | 11 March 2010 |
| | | | | US | 7277052 | B2 | 02 October 2007 |
| | | | | PL | 1500951 | T3 | 30 June 2010 |
| | | | | ES | 2339660 | T3 | 24 May 2010 |
| | | | | FR | 2858061 | A1 | 28 January 2005 |
| | | | | FR | 2858061 | B1 | 07 October 2005 |
| | | | | EP | 1500951 | A1 | 26 January 2005 |
| | | | | EP | 1500951 | B1 | 20 January 2010 |
| | | | | AT | 456066 | T | 15 February 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210846178